# EUROPÄISCHE PATENTSCHRIFT

(11) **EP 0 790 423 B1**
(45) Veröffentlichungstag und Bekanntmachung des Hinweises auf die Patenterteilung: **06.09.2000**
(21) Anmeldenummer: 97101946.8
(22) Anmeldetag: 07.02.1997
(51) Int. Cl.: F16D 1/116

(54) **Verfahren zur Herstellung einer Vorrichtung zum Verbinden eines kerbverzahnten, der Übertragung von Drehmomenten dienenden Wellenzapfens**
Method for producing a device for the connection of a splined torque transmitting shaft end
Méthode de fabrication d'un dispositif de connection pour des extrémités d'arbres cannelés destiné à la transmission d'un couple

(30) Priorität: 17.02.1996 DE 19605894
(43) Veröffentlichungstag der Anmeldung: 20.08.1997
(73) Patentinhaber: ETABLISSEMENT SUPERVIS, FL-9490 Vaduz (LI)
(72) Erfinder: Christian, Lutz, Ing., 6714 Nüziders (AT)
(74) Vertreter: Hofmann, Ralf U., Dr.

(56) Entgegenhaltungen:
- EP-A- 0 092 669
- EP-A- 0 225 554
- EP-A- 0 645 548
- GB-A- 2 292 178

## Beschreibung

Die Erfindung bezieht sich auf ein Verfahren zur Herstellung einer Vorrichtung zum Verbinden eines kerbverzahnten, der Übertragung von Drehmomenten dienenden Wellenzapfens mit einem eine innenkerbverzahnte Hülse tragenden Bauteil, wobei die Hülse einen ersten, der Aufnahme des Wellenzapfens dienenden Abschnitt aufweist und in einem daran anschließenden zweiten Abschnitt in einer Querschnittsebene der Hülse mindestens eine Bohrung mit einer Sperrkugel sowie in diesem Abschnitt innerhalb der Hülse ein diese Bohrung verschließendes, gegen die Kraft einer Feder und gegen das mit der Hülse verbundene Bauteil verschiebbares Verschlußteil vorgesehen sind, und die Hülse von einer relativ zu ihr achsial verschiebbaren, federbelasteten Buchse mit einer Nut zur Aufnahme der Sperrkugel aufgenommen ist und der Wellenzapfen nahe seiner Stirnseite eine umlaufende Nut besitzt und der Durchmesser der in einer Querschnittsebene des zweiten Abschnittes liegenden Bohrung so groß ist wie der Durchmesser der Sperrkugel und die Tiefe der am Wellenzapfen vorgesehenen Nut kleiner ist als der halbe Durchmesser der Sperrkugel und der erste Abschnitt der Hülse mehrere achsparallele Längsschlitze aufweist und auf eine nach diesem Verfahren herstellbare Vorrichtung.

Eine Vorrichtung dieser Art zeigt und beschreibt die deutsche Patentanmeldung P 43 32 485. Bei dieser vorbekannten Konstruktion werden der gabelartige Bauteil und die innenkerbverzahnte Hülse getrennt hergestellt und dann miteinander verbunden, wenn die Buchse auf die Hülse aufgeschoben ist, und zwar von der Seite her, an der nachfolgend der gabelartige Bauteil an der Hülse festgelegt wird. Da die Drehmomente über den gabelartigen Bauteil und die Hülse sowie über deren Verbindungsstelle übertragen werden, ist es zweckmäßig, die Hülse und den gabelartigen Bauteil einstückig auszubilden. Eine solche einstückige Ausbildung von gabelartigem Bauteil und Hülse im Zusammenhang mit einer Vorrichtung vergleichbarer Art ist an sich bekannt EP-A-0 092 669. Bei dieser vorbekannten Konstruktion ist jedoch die innenkerbverzahnte Hülse nicht geschlitzt und der äußere Mantel dieser Hülse ist zylindrisch, so daß die Buchse von der Stirnseite her auf die Hülse aufgeschoben werden kann, von der auch der Wellenzapfen in die Hülse eingefügt wird. Die hier entlang der Hülse verschiebbar gelagerte Buchse wird durch einen stirnrandseitig an der Hülse vorgesehenen, festlegbaren Ring gegen Verlust gesichert. Bei dieser vorbekannten Konstruktion hat die auf der Hülse verschiebbar gelagerte Buchse ausschließlich und allein die Funktion, die Sperrkugeln entweder zu blockieren oder freizugeben. Trotz der aufwendigen vorbekannten Konstruktion ist jedoch eine spielfreie Lagerung der miteinander zu verbindenden Teile nicht sichergestellt, im Gegensatz zur ersterläuterten Konstruktion nach der deutschen Patentanmeldung 43 32 485, bei welcher dank der längsgeschlitzten Hülse mit dem konischen Außenmantel und der dazu korrespondierenden Buchse ein Flankenspiel zwischen den miteinander in Eingriff stehenden Kerbverzahnungen vermieden ist und somit Drehmomente spielfrei übertragen werden können, was vor allem bei Lenksäulen für Kraftfahrzeuge gefordert ist, doch ist die Erfindung auf dieses spezielle Anwendungsgebiet nicht eingeschränkt.

Die Erfindung zielt nun darauf ab, ein Verfahren vorzuschlagen, daß bei einer Vorrichtung der gegenständlichen Art die Hülse und der gabelartige Bauteil einstückig ausgebildet werden können und daß trotz dem konisch ausgebildeten Mantel der Hülse die Buchse von der Seite her montiert werden kann, von der beim bestimmungsgemäßen Einsatz der Vorrichtung auch der Wellenzapfen in die Hülse eingeführt wird, was vorschlagsgemäß dadurch gelingt, daß die Buchse mit einem kleinsten Innendurchmesser gefertigt wird, der größer ist als der größte Außendurchmesser der längsgeschlitzten Hülse und nach dem Aufschieben der Buchse auf die Hülse die Buchse zumindest über einen Teil ihrer achsialen Länge hinsichtlich ihres Durchmessers verjüngt oder/und der stirnseitige Bereich der Hülse aufgeweitet wird zur formschlüssigen Begrenzung des Verschiebeweges der Buchse gegenüber der Hülse. Dank dieses Vorschlages ist es möglich, die Buchse in der erwähnten Art auf der Hülse anzubringen. Das Ausmaß der Verjüngung des Durchmessers der auf die Hülse aufgeschobenen Buchse bzw. die Aufweitung des stirnseitigen Bereichs der Hülse wird durch die Beibehaltung und Bewahrung der Verschiebbarkeit zwischen Buchse einerseits und Hülse andererseits begrenzt.

Anhand der Zeichnung werden Ausführungsbeispiele der Erfindung veranschaulicht, ohne sie auf die gezeigten Ausführungsbeispiele einzuschränken. Es zeigen:
Fig. 1 nach Art einer Explosionszeichnung die vorerst getrennten, jedoch zu verbindenden Bauteile, wobei der eine Bauteil im Längsschnitt dargestellt ist;
Fig. 2 im Längsschnitt den gabelartigen Bauteil mit Hülse und die Buchse unmittelbar vor ihrem Zusammenbau, ebenfalls nach Art einer Explosionszeichnung dargestellt;
die Fig. 3 und 4, die Fig. 5 und 6 sowie die Fig. 7 und 8 zeigen je drei weitere Ausführungsbeispiele in den Darstellungen nach den Fig. 1 und 2; in den einzelnen Figuren sind gleiche Teile mit jeweils gleichen Hinweisziffern ausgestattet.

Ein Wellenzapfen 1, der beispielsweise eine Lenkwelle einer Kraftfahrzeuglenkung bildet, besitzt an seinem einen Ende eine Kerbverzahnung 2 und nahe seiner Stirnseite 3 eine umlaufende Nut 4 mit einem kreisbogenförmigen Querschnitt.

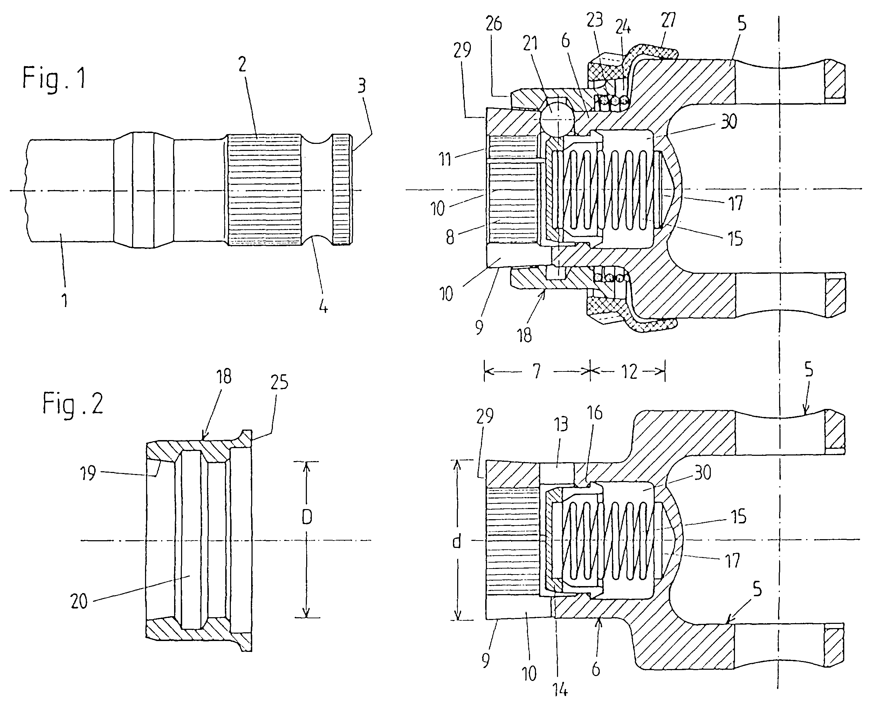

Dieser Wellenzapfen 1 ist nun mit einem Kardangelenk zu verbinden, von dem in Fig. 1 die eine Gelenkgabel 5 gezeigt ist. Diese Gelenkgabel 5 ist mit einer Hülse 6 einstückig ausgebildet. Diese Hülse 6 besitzt einen ersten Abschnitt 7 mit einer inneren Kerbverzahnung 8, wobei die äußere Begrenzungsfläche 9 dieses Abschnittes 7 einen gegen die Stirnseite 29 der Hülse 6 divergierenden konischen Anzug besitzt, beispielsweise von annähernd zwei Bogengraden. Mehrere achsparallele Längsschlitze 10 unterteilen diesen Abschnitt 7 der Hülse 6 in Umfangsrichtung derselben in einzelne federnde Laschen 11. Die achsiale Länge dieser Kerbverzahnung 8 ist mindestens so groß wie jene des Wellenzapfens 1.

An diesen ersten Abschnitt 7 der Hülse 6 schließt ein zweiter Abschnitt 12 an mit einer Sackbohrung 30, der in einer Querschnittsebene, die nahe dem ersten Abschnitt 7 liegt, in Umfangsrichtung mehrere Bohrungen 13 aufweist. Dieser Abschnitt 12 ist etwas länger als der erstbesprochene Abschnitt 7. Innerhalb dieses Abschnittes 12 liegt ein topfartiger Verschlußteil 14, der durch die Kraft einer Feder 15 an einer inneren Schulter 16 im Übergang vom einen Abschnitt 7 zum anderen Abschnitt 12 der Hülse 6 gehalten ist, wobei die achsiale Länge dieses topfartigen Verschlußteiles 14 mindestens so groß ist wie der Durchmesser der Bohrungen 13. Die innerhalb der Hülse 6 liegende Feder 15 mit kleiner Federkonstante stützt sich mit ihrem anderen Ende am Boden 17 der Sackbohrung 30 ab.

Diese Hülse 6 ist nun von einer Buchse 18 aufgenommen, die relativ zu ihr achsial verschiebbar gelagert ist. Diese Buchse 18 besitzt eine zum konischen Anzug der Hülse 6 korrespondierende Bohrung 19, an welche in Achsrichtung der Buchse 18 eine umlaufende Nut 20 anschließt, in welcher eine der Anzahl der Bohrung 13 entsprechende Anzahl von Sperrkugeln 21 liegt. Der Durchmesser der Sperrkugeln 21 entspricht dem Durchmesser der Bohrungen 13. Des weiteren nimmt diese Buchse 18 mit ihrer unteren stirnseitigen Bohrung 22 eine Schraubenfeder 23 auf, die sich mit ihrem einen Ende an der Schulter der Gelenkgabel 5 abstützt. Diese Schraubenfeder 23 ist von der Hülse 6 durchsetzt. Ihre Federkonstante ist um ein Vielfaches größer als jene der in der Hülse 6 liegenden Feder 15, die mit dem Verschlußteil 14 zusammenwirkt.

Der Durchmesser der in einer Querschnittsebene des zweiten Abschnittes 12 der Hülse 6 liegenden Bohrungen 13 ist so groß wie der Durchmesser der Sperrkugeln 21, und die Tiefe der vorzugsweise nahe der Stirnseite 3 des Wellenzapfens 1 vorgesehenen Nut 4 ist kleiner als der halbe Durchmesser der Sperrkugeln 21. Die Breite des Ringraumes, der einerseits vom Grund der in der Buchse 18 eingedrehten Nut 20 und andererseits von dem in seiner Verschlußstellung befindlichen Verschlußteil 14 begrenzt ist, entspricht zumindest dem Durchmesser der Sperrkugeln 21. Durch die topfartige Ausbildung des Verschlußteiles 14 ist das eine Ende der ihn tragenden Feder 15 geführt und gehalten. Die Feder 23 mit der großen Federkonstante liegt in einem ringförmigen Spaltraum, der vom zweiten Abschnitt 12 der Hülse 6 mit der Wandung der ihn aufnehmenden Bohrung 22 der Buchse 18 begrenzt ist. Die achsiale Länge dieses Ringraumes ist etwas kürzer als die Länge der zusammengedrückten, betriebsmäßig vorgespannten Feder 23 (Fig. 1). Die Länge der Hülse 6 ist größer als die Länge der Buchse 18. Die an der Innenseite der Buchse 18 vorgesehene, der Aufnahme der Sperrkugeln 21 dienende Nut 20 ist etwa im mittleren Längsbereich der Buchse 18 angeordnet.

Fig. 1 zeigt die zu verbindenden Teile in fluchtender Anordnung zueinander, jedoch noch voneinander getrennt. Durch die innere Feder 15 wird der topfartige Verschlußteil 14 gegen die Schulter 16 gedrückt, wodurch die Sperrkugeln 21 vorerst daran gehindert sind, durch die Bohrungen 13 in die Hülse 6 einzutreten. Dabei ist die äußere Feder 23 vorgespannt, der obere Teil der Hülse 6 bzw. deren Abschnitt 7 ragt zum Teil über die Stirnseite 26 der Buchse 18 hinaus.

Werden die beiden Teile gegeneinander geführt, so fährt der Wellenzapfen 1 bzw. seine Kerbverzahnung 2 in den Abschnitt 7 der Hülse 6 ein, bis seine Stirnseite 3 an den Verschlußteil 14 anstößt. Beim weiteren Zusammenschieben der Teile wird nun der Verschlußteil 14 durch die Stirnseite 3 des Wellenzapfens 1 gegen die Kraft der Feder 15, die nur eine sehr geringe Kraft auszuüben vermag, zurückgeschoben, wodurch nun die Bohrungen 13 vom Verschlußteil 14 freigegeben werden, so daß die Sperrkugeln 21 in diese Bohrungen 13 eintreten können, sobald die Nut 4 des Wellenzapfens 1 jene Querschnittsebene der Hülse 6 erreicht hat, in der diese Bohrungen 13 liegen. Dabei tritt die vorerst vorgespannte Feder 23 in Aktion, die nunmehr mit großer Kraft die Buchse 18 nach oben schiebt, wodurch einerseits die in die Bohrung 13 eingefallenen Sperrkugeln 21 in ihrer Sperrlage gehalten sind und andererseits die durch die Längsschlitze 10 gebildeten Laschen 11 des Abschnittes 7 der Hülse 6 radial zusammengedrückt werden, so daß die beiden Kerbverzahnungen 2 und 8 spielfrei miteinander verbunden sind. Damit ist der Forderung nach einer spielfreien Verbindung in Umdrehungsrichtung der Welle bzw. Wellenteile, wie sie bei Lenkungen für Kraftfahrzeuge notwendig sind, ausreichend Rechnung getragen.

Diese vorstehend im einzelnen erläuterte Verbindung ist auch wieder lösbar. Zu diesem Zweck wird die Buchse 18 vorerst gegen die Kraft der Feder 23 nach unten gedrückt, bis die Sperrkugeln 21 deckungsgleich mit der Nut 20 liegen, worauf diese Kugeln radial nach außen in diese Nut rollen, worauf der Wellenzapfen 1 aus der Hülse 6 ausziehbar ist.

Um den Spaltraum 24, der von der Schulter der Gelenkgabel 5 einerseits und andererseits von der inneren Stirnseite 25 der Buchse 18 begrenzt ist, gegen das Eindringen von Schmutz zu schützen, ist hier eine Manschette 27 aus elastischem Material vorgesehen, deren der Hülse 6 zugewandte Abschnitt so ausgebildet ist, daß er die Verschiebung der Buchse 18 nicht behindert und trotzdem für eine ausreichende Abdichtung gegen Eindringen von Schmutz sorgen kann.

Da die Gelenkgabel 5 und die Hülse 6 einen einstückigen Bauteil bilden und die äußere Begrenzungsfläche 9 der Hülse 6 gegen die Stirnseite 29 hin konisch divergierend gestaltet ist, ist ersichtlich, daß die Buchse 18, die mit dieser konischen, äußeren Begrenzungsfläche 9 der Hülse 6 zusammenwirken soll, nicht ohne weiteres auf diesen aus Gelenkgabel 5 und Hülse 6 einstückig ausgebildeten Bauteil aufgebracht werden kann. Gemäß der Erfindung ist nun vorgesehen, daß diese Buchse 18 mit einem kleinsten Innendurchmesser D gefertigt wird, der um ein geringes Maß größer ist als der stirnseitige Durchmesser d der Hülse 6. In der Praxis genügen hier wenige Zehntelmillimeter. Beträgt beispielsweise der Durchmesser d 27 mm, so wird die Buchse 18 mit einem Innendurchmesser D von 27.2 mm gefertigt.

Die Buchse 18 kann nun aufgrund dieser Durchmesserverhältnisse auf die Hülse 6 aufgeschoben werden (nachdem die Feder 23 und die Sperrkugeln 21 eingebracht worden sind), worauf mit einem geeigneten Werkzeug die Buchse 18 hinsichtlich ihres Durchmessers verjüngt, reduziert wird, ausgehend von den oben beispielsweise angegebenen Maßen auf D = 26 mm. Dadurch ist die Buchse 18 auf der Hülse 6 festgelegt, ohne ihre für die Montage und Demontage der Verbindung erforderliche achsiale Verschiebbarkeit zu unterbinden. Es bedarf hier eines sehr sorgfältigen und hochpräzisen Arbeitsschrittes, damit das für die ordnungsgemäße Funktion erforderliche Ausmaß der Verjüngung oder Reduzierung nicht überschritten wird, weil in einem solchen Falle die Buchse 18 auf der Hülse festgeklemmt würde, wenn das Ausmaß der Verjüngung oder Reduzierung überschritten wird. Während der Verjüngung bzw. Reduzierung des Durchmessers der Buchse 18 wird diese Buchse über ihre innere Stirnseite 25 gegenüber einem ortsfesten Widerlager abgestützt. Diese Verjüngung oder Reduzierung der Buchse 18 erfolgt mit einem Hohlwerkzeug, das auf die Buchse 18 achsial aufgeschoben wird, so daß die Buchse 18 als Ganzes verjüngt bzw. reduziert wird, was sich ja auch unmittelbar im entsprechenden Verhältnis auf den Umfang der Buchse 18 auswirkt. Ist die im Zusammenhang mit Fig. 1 geschilderte Verbindung hergestellt, so darf die Buchse 18 durch die Kraft der Feder 23 ja nur so weit gegen die Hülse 6 verschoben werden, daß einerseits die in die Nut 4 des Wellenzapfens 1 eingefallenen Sperrkugeln 21 in ihrer Riegelstellung gehalten werden und andererseits die durch die Längsschlitze 10 gebildeten Laschen 11 der Hülse 6 durch die konische Bohrung 19 der Buchse 18 gegen die Kerbverzahnung 2 des Wellenzapfens 1 gedrückt werden, um dadurch den gewünschten spielfreien Formschluß zu erhalten.

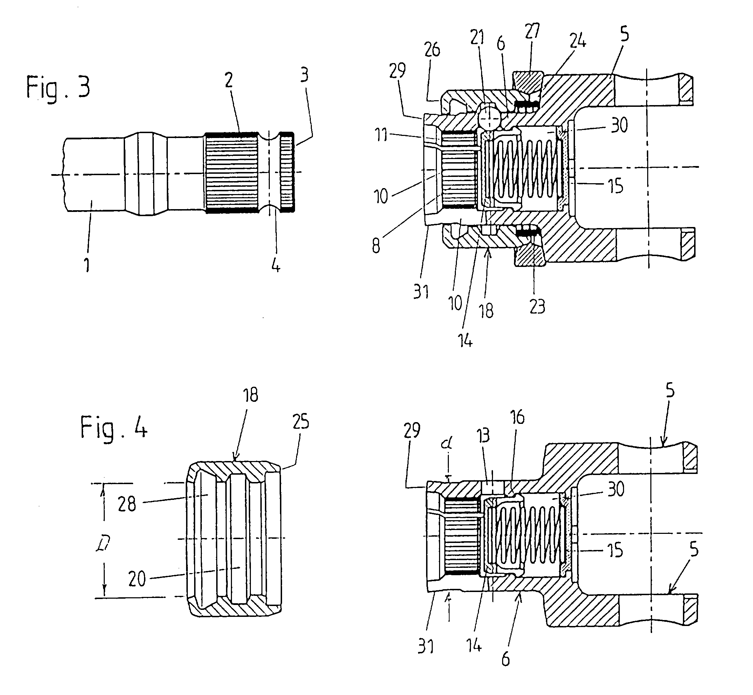

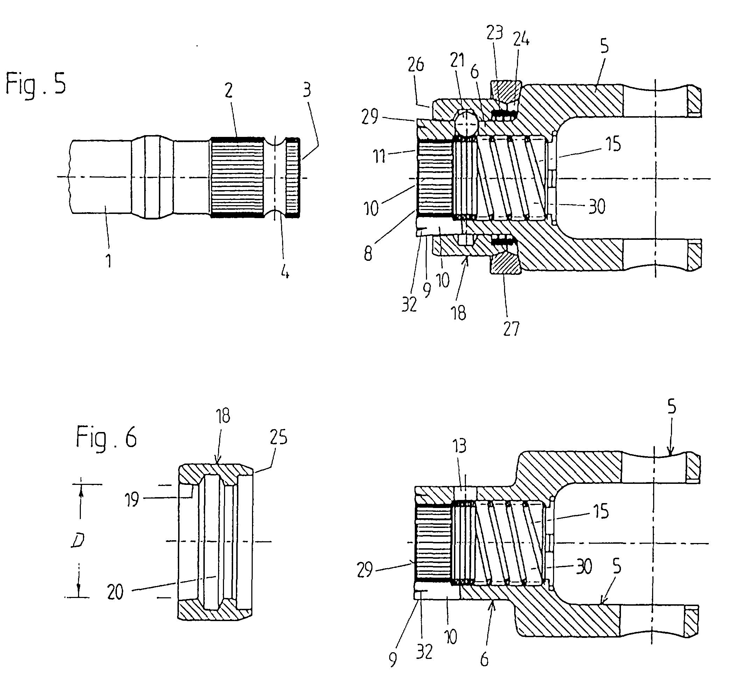

Das Ausführungsbeispiel nach den Fig. 3 und 4 unterscheidet sich vom erstbesprochenen dadurch, daß der eine Randbereich der vorerst noch nicht montierten Buchse 18 eine umlaufende Hinterschneidung 18 aufweist. Der mündungsseitige Rand 31 der Hülse 6 besitzt einen konischen Anzug, jedoch ist der Basisdurchmesser dieses konischen Anzuges gleich oder kleiner dem Durchmesser des zylindrischen Teils der Hülse 6, der sich über den größten Teil der Länge dieser Hülse erstreckt. Ist die Büchse 18 auf die Hülse 6 aufgeschoben, so wird der die Hinterschneidung 28 aufweisende Randbereich der Buchse 18 vorzugsweise auf seinem ganzen Umfang eingedrückt und dadurch der innere Durchmesser dieses Randbereiches verjüngt, so daß damit der erwünschte Formschluß erzielt wird (Fig. 3).

Das Ausführungsbeispiel nach den Fig. 5 und 6 zeigt eine Hülse 6 mit über die ganze achsiale Länge gleichem Durchmesser. Die Buchse 18 entspricht in ihrer Ausgestaltung jener nach Fig. 2. In die Stirnseite 29 der Hülse 6 ist ein umlaufender Schlitz 32 eingearbeitet, beispielsweise eingeschnitten oder eingefräst. Nach dem Aufschieben der Buchse 18 auf die Hülse 6 wird der außerhalb des kreisförmig verlaufenden Schlitzes 32 liegende Bereich der Hülse 6 nach außen gedrückt (Fig. 5).

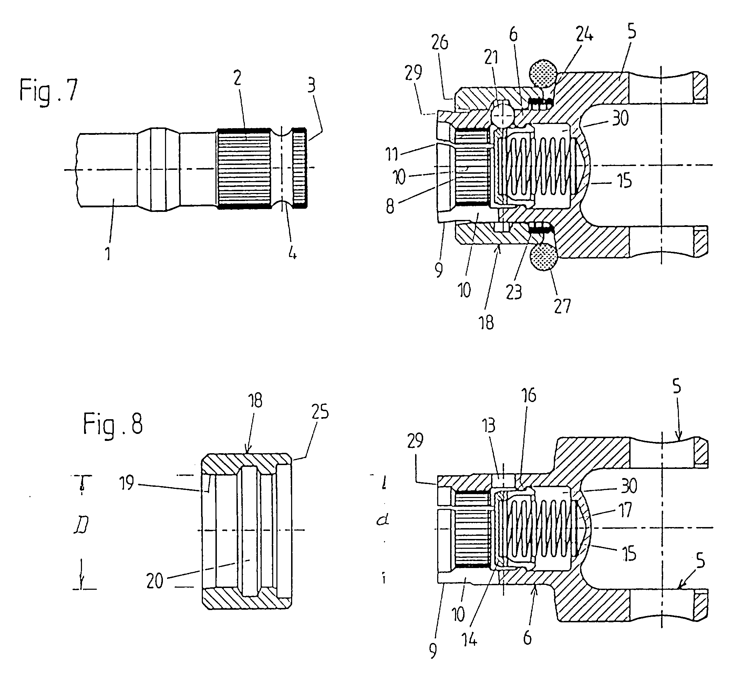

Beim Ausführungsbeispiel nach den Fig. 7 und 8 ist die Hülse 6 über ihre gesamte Länge zylindrisch ausgebildet, doch ist der Durchmesser des mündungsseitigen Bereiches gegenüber dem restlichen Bereich der Hülse 6 etwas verjüngt. Darist die Kerbverzahnung 8 gegenüber der Stirnseite 29 etwas zurückversetzt. Nach dem Aufschieben der Buchse 18 auf die Hülse 6 wird der stirnseitige Bereich der Hülse 6 etwas aufgeweitet, wobei dessen Außenkontur eine konische Form annimmt (Fig. 7).

In allen Fällen ist die Aufweitung bzw. Verjüngung so groß, daß ein ausreichender Formschluß zwischen Hülse 6 und Buchse 18 erzielt wird, so daß die Buchse 18 zwar auf der Hülse 6 verschiebbar ist - gegen die Kraft der Feder 23 - sie jedoch durch eben diese Feder 23 nach dem Einrasten der Sperrkugeln 21 in die Nut 4 des Wellenzapfens 1 soweit nach links verschoben wird, daß durch den erwähnten Formschluß die Laschen 11 radial gegen die Kerbverzahnung 2 des Wellenzapfens 1 gedrückt werden, um so den gewünschten spielfreien Formschluß zu erhalten.

## Patentansprüche

1. Verfahren zur Herstellung einer Vorrichtung zum Verbinden eines kerbverzahnten, der Übertragung von Drehmomenten dienenden Wellenzapfens (1) mit einem eine innenkerbverzahnte Hülse (6) tragenden Bauteil (5), wobei die Hülse (6) einen ersten, der Aufnahme des Wellenzapfens (1) dienenden Abschnitt (7) aufweist und in einem daran anschließenden zweiten Abschnitt (12) in einer Querschnittsebene der Hülse (6) mindestens eine Bohrung (13) mit einer Sperrkugel (21) sowie in diesem Abschnitt innerhalb der Hülse (6) ein diese Bohrung (13) verschließendes, gegen die Kraft einer Feder (15) und gegen das mit der Hülse (6) verbundene Bauteil (5) verschiebbares Verschlußteil (14) vorgesehen sind, und die Hülse (6) von einer relativ zu ihr achsial verschiebbaren, federbelasteten Buchse (18) mit einer Nut (20) zur Aufnahme der Spen-kugel (21) aufgenommen ist und der Wellenzapfen (1) nahe seiner Stirnseite (3) eine umlaufende Nut (4) besitzt und der Durchmesser der in einer Quer-schnittsebene des zweiten Abschnittes (12) liegenden Bohrung (13) so groß ist wie der Durchmesser der Sperrkugel (21) und die Tiefe der am Wellenzapfen (1) vorgesehenen Nut (4) kleiner ist als der halbe Durchmesser der Sperrkugel (21) und der erste Abschnitt (7) der Hülse (6) mehrere achsparallele Längsschlitze (10) aufweist, dadurch gekennzeichnet, daß die Buchse (18) mit einem kleinsten Innendurchmesser (D) gefertigt wird, der größer ist als der größte Außendurchmesser (d) der längsgeschlitzten Hülse (6) und nach dem Aufschieben der Buchse (18) auf die Hülse (6) die Buchse (18) zumindest über einen Teil ihrer achsialen Länge hinsichtlich ihres Durchmessers verjüngt oder/und der stirnseitige Bereich der Hülse (6) aufgeweitet wird zur formschlüssigen Begrenzung des Verschiebeweges der Buchse (18) gegenüber der Hülse (6).

2. Verfahren nach Anspruch 1, dadurch gekennzeichnet, daß die Buchse (18) von der Seite auf die Hülse (6) aufgeschoben wird, von der auch der Wellenzapfen (1) in die Hülse (6) eingefügt wird.

3. Verfahren nach Anspruch 1 oder 2, dadurch gekennzeichnet, daß das Ausmaß der Verjüngung des Durchmessers der auf die Hülse (6) aufgeschobenen Buchse (18) bzw. die Aufweitung des stirnseitigen Bereichs der Hülse (6)

4. Verfahren nach einem der Ansprüche 1 bis 3, dadurch gekennzeichnet, daß die Verjüngung oder Reduzierung des Durchmessers der Buchse (18) mittels eines auf die Buchse (18) axial aufschiebbaren Werkzeuges erwirkt wird.

5. Verfahren nach Anspruch 1, dadurch gekennzeichnet, daß die Stirnseite (29) der Hülse (6) kreisringförmig eingeschnitten wird und der außerhalb der kreisringförmigen Einschnittlinie liegende Bereich nach außen gedrängt wird.

6. Vorrichtung zum Verbinden eines kerbverzahnten, der Übertragung von Drehmomenten dienenden Wellenzapfens (1) mit einem eine innenkerbverzahnte Hülse (6) tragenden Bauteil (5), wobei die Hülse (6) einen ersten, der Aufnahme des Wellenzapfens (1) dienenden Abschnitt (7) aufweist und in einem daran anschließenden zweiten Abschnitt (12) in einer Querschnittsebene der Hülse (6) mindestens eine Bohrung (13) mit einer Sperrkugel (21) sowie in diesem Abschnitt innerhalb der Hülse (6) ein diese Bohrung (13) verschließendes, gegen die Kraft einer Feder (15) und gegen das mit der Hülse (6) verbundene Bauteil (5) verschiebbares Verschlußteil (14) vorgesehen sind, und die Hülse (6) von einer relativ zu ihr axial verschiebbaren, federbelasteten Buchse (18) mit einer Nut (20) zur Aufnahme der Sperrkugel (21) aufgenommen ist und der Wellenzapfen (1) nahe seiner Stirnseite (3) eine umlaufende Nut (4) besitzt und der Durchmesser der in einer Querschnittsebene des zweiten Abschnittes (12) liegenden Bohrung (13) so groß ist wie der Durchmesser der Sperrkugel (21) und die Tiefe der am Wellenzapfen (1) vorgesehenen Nut (4) kleiner ist als der halbe Durchmesser der Sperrkugel (21) und der erste Abschnitt (7) der Hülse (6) mehrere achsparallele Längsschlitze (10) aufweist und die Buchse (18) einen kleinsten Innendurchmesser (D) aufweist, der größer ist als der größte Außendurchmesser (d) der längsgeschlitzten Hülse (6) und nach dem Aufschieben der Buchse (18) auf die Hülse (6) die Buchse (18) zumindest über einen Teil ihrer axialen Länge hinsichtlich ihres Durchmessers verjüngt oder/und der stirnseitige Bereich der Hülse (6) aufgeweitet ist zur formschlüssigen Begrenzung des Verschiebeweges der Buchse (18) gegenüber der Hülse (6), herstellbar nach dem Verfahren gemäß Anspruch 1, dadurch gekennzeichnet, daß die innenverzahnte Hülse (6) und der sie tragende gabelartige Bauteil (5) einstückig ausgebildet sind.

7. Vorrichtung nach Anspruch 6, dadurch gekennzeichnet, daß die innere Kerbverzahnung (8) gegenüber der Stirnseite (29) der Hülse (6) zurückversetzt ist.

8. Vorrichtung nach Anspruch 6, dadurch gekennzeichnet, daß die Hülse (6) zur Aufnahme des Wellenzapfens eine sackartige Bohrung (30) aufweist.

## Claims

1. A method of producing a device for connecting a serrated shaft journal (1) - used for transmitting torques - to a component (5) carrying an internally serrated sleeve (6), wherein the sleeve (6) is provided with a first portion (7) used for receiving the shaft journal (1), and at least one bore (13) with a locking ball (21) is provided in a second portion (12) adjoining the first in a cross-sectional plane of the sleeve (6) and a closure part (14) closing the said bore (13) and displaceable against the force of a spring (15) and against the component (5) connected to the sleeve (6) is provided in the said portion (12) inside the sleeve (6), and the sleeve (6) is received by a spring-loaded bush (18) displaceable axially relative thereto and having a groove (20) for receiving the locking ball (21), and the shaft journal (1) has a continuous groove (4) close to its end face (3) and the diameter of the bore (13) situated in a cross-sectional plane of the second portion (12) is as large as the diameter of the locking ball (21) and the depth of the groove (4) provided on the shaft journal (1) is smaller than half the diameter of the locking ball (21) and the first portion (7) of the sleeve (6) is provided with a plurality of axially parallel longitudinal slots (10), **characterized in that** the bush (18) is produced with a minimal internal diameter (**D**) which is larger than the largest external diameter (**d**) of the longitudinally slotted sleeve (6), and after the bush (18) is pressed onto the sleeve (6) the bush (18) tapers at least over part of its axial length with respect to its diameter or/and the end-face region of the sleeve (6) is enlarged in order to bound the displacement path of the bush (18) with respect to the sleeve (6) in a positively locking manner.

2. A method according to Claim 1, characterized in that the bush (18) is pressed onto the sleeve (6) from the side, from which the shaft journal (1) is also inserted into the sleeve (6).

3. A method according to Claim 1 or 2, **characterized in that** the dimension of the tapering of the diameter of the bush (18) pressed onto the sleeve (6) or the enlargement of the end-face region of the sleeve (6) is limited by the retention and preservation of the displaceability between the bush (18) and the sleeve (6).

4. A method according to one of Claims 1 to 3, **characterized in that** the tapering or reduction of the diameter of the bush (18) is produced by means of a tool which can be pressed axially onto the bush (18).

5. A method according to Claim 1, **characterized in that** the front end (29) of the sleeve (6) is indented in an annular manner, and the region situated outside the annular indentation line is shifted towards the outside.

6. A device for connecting a serrated shaft journal (1) - used for transmitting torques - to a component (5) carrying an internally serrated sleeve (6), wherein the sleeve (6) is provided with a first portion (7) used for receiving the shaft journal (1). and at least one bore (13) with a locking ball (21) is provided in a second portion (12) adjoining the first in a cross-sectional plane of the sleeve (6) and a closure part (14) closing the said bore (13) and displaceable against the force of a spring (15) and against the component (5) connected to the sleeve (6) is provided in the said portion (12) inside the sleeve (6), and the sleeve (6) is received by a spring-loaded bush (18) displaceable axially relative thereto and having a groove (20) for receiving the locking ball (21), and the shaft journal (1) has a continuous groove (4) close to its end face (3) and the diameter of the bore (13) situated in a cross-sectional plane of the second portion (12) is as large as the diameter of the locking ball (21) and the depth of the groove (4) provided on the shaft journal (1) is smaller than half the diameter of the locking ball (21) and the first portion (7) of the sleeve (6) is provided with a plurality of axially parallel longitudinal slots (10), and the bush (18) is provided with a minimal internal diameter (**D**) which is larger than the largest external diameter (**d**) of the longitudinally slotted sleeve (6), and after the bush (18) is pressed onto the sleeve (6) the bush (18) tapers at least over part of its axial length with respect to its diameter or/and the end-face region of the sleeve (6) is enlarged in order to bound the displacement path of the bush (18) with respect to the sleeve (6) in a positively locking manner, producible in accordance with the method according to Claim 1, **characterized in that** the internally toothed sleeve (6) and the fork-like component (5) carrying it are constructed in one piece.

7. A device according to Claim 6, **characterized in that** the internal indentation (8) is set back with respect to the end face (29) of the sleeve (6).

8. A device according to Claim 6, **characterized in that** the sleeve (6) has a blind bore (30) for receiving the shaft journal.

## Revendications

1. Procédé de fabrication d'un dispositif destiné à relier un tourillon d'arbre (1) cannelé et servant à transmettre des couples avec un composant (5) portant une douille (6) à denture cannelée interne, dans lequel
- la douille (6) présente une première partie (7) servant à recevoir le tourillon d'arbre (1), suivie d'une seconde partie (12) qui présente, dans un plan de section de la douille (6) au moins un perçage (13) contenant une bille d'arrêt (21) et également une pièce de fermeture (14) obturant ce perçage (13) et pouvant coulisser, contre l'action d'un ressort (15), par rapport au composant (5) relié à la douille (6) qui, elle-même, est entourée d'une fourrure (18) pouvant coulisser axialement par rapport à la douille, chargée par un ressort et portant une gorge (20) pour recevoir la bille d'arrêt (21),
- le tourillon d'arbre (1) présente près de sa face frontale (3), une gorge périphérique (4) et le perçage (13) situé dans un plan de section de la seconde partie (2) a un diamètre correspondant à celui de la bille d'arrêt (21), et
- la profondeur de la gorge (4) creusée dans le tourillon d'arbre (1) est inférieure à la moitié du diamètre de la bille d'arrêt (21) et la première partie (7) de la douille (6) est coupée par plusieurs fentes longitudinales (10) parallèles à l'axe,
caractérisé en ce que
la fourrure (18) présente un plus petit diamètre interne (D) supérieur au diamètre externe maximal (d) de la douille (6) fendue longitudinalement et, après qu'elle ait été glissée sur la douille (6), la fourrure (18) a son diamètre réduit, sur au moins une partie de sa longueur axiale, et/ou la zone frontale de la douille (6) est expansée jusqu'à donner, au moyen d'un verrouillage par combinaison de formes, une limite à la course de coulissement de la fourrure (18) par rapport à la douille (6).

2. Procédé selon la revendication 1,
caractérisé en ce que
la fourrure (18) est glissée sur la douille (6) du côté par lequel le tourillon d'arbre (1) est introduit dans la douille (6) .

3. Procédé selon l'une quelconque des revendications 1 ou 2,
caractérisé en ce que
la dimension de la réduction du diamètre de la fourrure (18) montée sur la douille (6) ou de l'expansion donnée à la zone frontale de la douille (6) est limitée par le maintien de la possibilité qu'ont la fourrure (18) et la douille (6) de coulisser l'une sur l'autre.

4. Procédé selon l'une quelconque des revendications 1 à 3,
caractérisé en ce que
la réduction du diamètre de la fourrure (18) est réalisée au moyen d'un outil pouvant coulisser axialement sur la fourrure (18).

5. Procédé selon la revendication 1,
caractérisé en ce que
la face frontale (29) de la douille (6) est entaillée selon une ligne circulaire et la partie située à l'extérieur de cette ligne est repoussée vers l'extérieur.

6. Dispositif pour relier un tourillon d'arbre (1) portant une denture cannelée et servant à transmettre des couples avec un composant (5) portant une douille (6) à denture cannelée, dans lequel :
- la douille (6) présente une première partie (7) servant à recevoir le tourillon d'arbre (1), suivie d'une seconde partie (12) qui présente, dans un plan de section de la douille (6) au moins un perçage (13) contenant une bille d'arrêt (21) et également une pièce de fermeture (14) obturant ce perçage (13) et pouvant coulisser, contre l'action d'un ressort (15), par rapport au composant (5) relié à la douille (6) qui, elle-même, est entourée d'une fourrure (18) pouvant coulisser axialement par rapport à la douille, chargée par un ressort et portant une gorge (20) pour recevoir la bille d'arrêt (21),
- le tourillon d'arbre (1) présente près de sa face frontale (3), une gorge périphérique (4) et le perçage (13) situé dans un plan de section de la seconde partie (2) a un diamètre correspondant à celui de la bille d'arrêt (21),
- la profondeur de la gorge (4) creusée dans le tourillon d'arbre (1) est inférieure à la moitié du diamètre de la bille d'arrêt (21), et la première partie (7) de la douille (6) est coupée par plusieurs fentes longitudinales (10) parallèles à l'axe,
- la fourrure (18) présente un plus petit diamètre interne (D) supérieur au diamètre externe maximal (d) de la douille (6) fendue longitudinalement et, après qu'elle ait été glissée sur la douille (6), la fourrure (18) a son diamètre réduit, sur au moins une partie de sa longueur axiale, et/ou la zone frontale de la douille (6) est expansée jusqu'à donner, au moyen d'un verrouillage par combinaison de formes, une limite à la course de coulissement de la fourrure (18) par rapport à la douille (6),
- ce dispositif pouvant être fabriqué par le procédé selon la revendication 1,
caractérisé en ce que
la douille (6) à denture cannelée interne et le composant (5) en forme de fourche qui la porte, constituent une seule pièce.

7. Dispositif selon la revendication 6,
caractérisé en ce que
la denture cannelée interne (8) est en retrait par rapport à la face frontale (29) de la douille (6).

8. Dispositif selon la revendication 6,
caractérisé en ce que
la douille (6) présente un alésage borgne (30) pour accueillir le tourillon d'arbre.
